(19) Europäisches Patentamt / European Patent Office / Office européen des brevets

(11) **EP 4 535 684 A1**

(12) **EUROPEAN PATENT APPLICATION**
published in accordance with Art. 153(4) EPC

(43) Date of publication:
09.04.2025 Bulletin 2025/15

(21) Application number: 23815293.8

(22) Date of filing: 01.06.2023

(51) International Patent Classification (IPC):
*H04B 7/185* (2006.01)

(52) Cooperative Patent Classification (CPC):
H04B 7/185; H04W 56/00

(86) International application number:
PCT/CN2023/097855

(87) International publication number:
WO 2023/232116 (07.12.2023 Gazette 2023/49)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 01.06.2022 CN 202210622929

(71) Applicant: Datang Mobile Communications Equipment Co., Ltd.
Beijing 100085 (CN)

(72) Inventors:
• LI, Zichuang
  Beijing 100085 (CN)
• WANG, Bin
  Beijing 100085 (CN)
• SUN, Xiangtao
  Beijing 100085 (CN)

(74) Representative: Studio Torta S.p.A.
Via Viotti, 9
10121 Torino (IT)

(54) **UPLINK AND DOWNLINK SYNCHRONIZATION METHOD AND APPARATUS FOR MOBILE SATELLITE COMMUNICATION SYSTEM**

(57) The present disclosure relates to mobile communication, and provides an uplink and downlink synchronization method and device for a mobile satellite communication system. The method includes: obtaining a sampling point deviation value between a user equipment (UE) and a mobile satellite within a preset time unit; performing downlink synchronization pre-compensation on a received first UE air interface data frame based on the sampling point deviation value; performing downlink coarse synchronization based on a compensation result; obtaining an uplink coarse synchronization parameter based on the downlink coarse synchronization parameter and a real-time distance between the UE and the mobile satellite; performing uplink synchronization pre-compensation on a to-be-transmitted second UE air interface data frame based on the sampling point deviation value; and performing uplink synchronization based on a compensation result and the uplink coarse synchronization parameter. Uplink and downlink synchronization pre-compensations are performed according to the sampling point deviation value, thereby reducing timing deviations accumulated in baseband processing, reducing errors in frame index and slot index and the number of radio link failures. Meanwhile, the physical frame duration of uplink receptions of multiple users by the mobile satellite base station is almost fixed, thereby reducing interference of the uplink receptions between multiple users.

```
obtaining a sampling point deviation value between UE and the mobile
satellite within a preset time unit, based on ephemeris parameters of a
mobile satellite and coordinates of the UE                              — S101

performing downlink synchronization pre-compensation on a received first
UE air interface data frame in each corresponding preset time unit based on
the sampling point deviation value and performing downlink coarse         — S102
synchronization based on the first UE air interface data frame that has
undergone the downlink synchronization pre-compensation

obtaining an uplink coarse synchronization parameter based on the downlink
coarse synchronization parameter and a real-time distance between the UE
and the mobile satellite; performing uplink synchronization pre-
compensation on a to-be-transmitted second UE air interface data frame in   — S103
each corresponding preset time unit, based on the sampling point deviation
value; and performing uplink synchronization based on the second UE air
interface data frame that has undergone the uplink synchronization pre-
compensation, and the uplink coarse synchronization parameter.
```

FIG. 1

EP 4 535 684 A1

## Description

## TECHNICAL FIELD

The present disclosure relates to the field of mobile communication technologies, and in particular to an uplink and downlink synchronization method and device for a mobile satellite communication system.

## BACKGROUND

For 6th Generation Mobile Networks (6G) communication technology, the mobile satellite communication technology is one of key technologies of the 6G communication technology. Communication payload of the mobile satellite communication system is a main payload of a satellite. As the satellite moves at high speed, high-speed relative motion between a user equipment and a satellite base station will bring about a large Doppler frequency shift. The larger Doppler frequency shift will affect a frame duration change of the communication system, thereby causing a series of problems to the user equipment for demodulation.

As a satellite communication payload device in the mobile satellite communication system, like the ground cellular network, downlink transmission and uplink reception of the base station are required to perform air interface physical frame synchronization. Operation scenarios of the user equipment in the mobile satellite communication system are different from those of a user equipment in the ground cellular network. The former needs to face two characteristics of high-speed relative motion and large path delay of the mobile satellite communication system, which makes the existing uplink and downlink synchronization solution corresponding to the ground cellular network cannot be applied to mobile satellite communications.

## SUMMARY

The present disclosure aims to solve at least one aspect of the above technical problems to a certain extent. The technical solutions provided in the embodiments of the present disclosure are as follows.

In a first aspect, one embodiment of the present disclosure provides an uplink and downlink synchronization method for a mobile satellite communication system, including:

obtaining a sampling point deviation value between a user equipment (UE) and a mobile satellite within a preset time unit, based on ephemeris parameters of the mobile satellite and coordinates of the UE;
performing downlink synchronization pre-compensation on a received first UE air interface data frame in each corresponding preset time unit based on the sampling point deviation value, and performing downlink coarse synchronization based on the first UE air interface data frame that has undergone the downlink synchronization pre-compensation; and obtaining an uplink coarse synchronization parameter based on the downlink coarse synchronization parameter and a real-time distance between the UE and the mobile satellite; performing uplink synchronization pre-compensation on a to-be-transmitted second UE air interface data frame in each corresponding preset time unit, based on the sampling point deviation value; and performing uplink synchronization based on the second UE air interface data frame that has undergone the uplink synchronization pre-compensation, and the uplink coarse synchronization parameter.

In an optional embodiment of the present disclosure, the performing downlink synchronization pre-compensation on a received first UE air interface data frame in each corresponding preset time unit based on the sampling point deviation value, and performing downlink coarse synchronization based on the first UE air interface data frame that has undergone the downlink synchronization pre-compensation, includes:

determining a synchronization header corresponding to each preset time unit of the first UE air interface data frame based on the sampling point deviation value and the number of preset sampling points in each preset time unit corresponding to a base station air interface data frame sent by the mobile satellite, thereby obtaining the first UE air interface data frame that has undergone downlink synchronization pre-compensation;
for each preset time unit, according to a position of corresponding synchronization header, taking the sampling point corresponding to the preset time unit for baseband processing to obtain a synchronization signal block (SSB) signal; and
performing the downlink coarse synchronization based on a downlink synchronization parameter in the SSB signal.

In an optional embodiment of the present disclosure, the determining a synchronization header corresponding to each preset time unit of the first UE air interface data frame based on the sampling point deviation value and the number of preset sampling points in each preset time unit corresponding to a base station air interface data frame sent by the mobile satellite, includes:

in case that the distance between the UE and the mobile satellite decreases, reducing the number of sampling points corresponding to the sampling point deviation value from a cyclic prefix (CP) of a first orthogonal frequency division multiplexing (OFDM) symbol from the position of the synchronization header in each preset time unit, and keeping the number of sampling points corresponding to other OFDM symbols and CP unchanged, thereby obtaining the synchronization header corresponding to each preset time unit; and/or,

in case that the distance between the UE and the mobile satellite increases, adding the number of sampling points corresponding to the sampling point deviation value to a last OFDM symbol from the position of the synchronization header in each preset time unit, and keeping the number of sampling points corresponding to other OFDM symbols and CP unchanged, thereby obtaining the synchronization header corresponding to each preset time unit.

In an optional embodiment of the present disclosure, the downlink synchronization parameter includes a local frame index at a synchronization frame header position, a local slot index, downlink air interface frame index, a downlink air interface slot index, and a sampling point index value corresponding to downlink air interface slot;

the performing the downlink coarse synchronization based on a downlink synchronization parameter in the SSB signal, includes:

taking the downlink air interface frame index as the local frame index, taking the downlink air interface slot index as the local slot index, and performing a next slot synchronization based on the sampling point index value corresponding to the downlink air interface slot.

In an optional embodiment of the present disclosure, the obtaining an uplink coarse synchronization parameter based on the downlink coarse synchronization parameter and a real-time distance between the UE and the mobile satellite, includes:

obtaining a first delay corresponding to the distance based on the real-time distance between the mobile satellite and the UE, and obtaining a second delay and a third delay corresponding to the downlink coarse synchronization based on the downlink coarse synchronization parameter;

obtaining an uplink air interface frame index and an uplink air interface slot frame index corresponding to a synchronization frame header position, and a sampling point index value corresponding to an uplink air interface slot, based on the first delay, the second delay and the third delay;

taking the uplink air interface frame index as the local frame index at the synchronization frame header position, taking the uplink air interface slot index as the local slot index at the synchronization frame header position, and performing a next slot synchronization based on the sampling point index value corresponding to the uplink air interface slot.

In an optional embodiment of the present disclosure, the performing uplink synchronization pre-compensation on a to-be-transmitted second UE air interface data frame in each corresponding preset time unit, based on the sampling point deviation value; and performing uplink synchronization based on the second UE air interface data frame that has undergone the uplink synchronization pre-compensation, and the uplink coarse synchronization parameter, includes:

determining a synchronization header corresponding to each preset time unit of the second UE air interface data frame, based on the sampling point deviation value and the number of preset sampling points corresponding to each preset time unit of the base station air interface data frame received by the mobile satellite, thereby obtaining the second UE air interface data frame that has undergone the uplink synchronization pre-compensation; and

sending an uplink synchronization signal to the mobile satellite based on the uplink frame index, uplink slot index and the synchronization header corresponding to each preset time unit of the uplink coarse synchronization parameter, and receiving an uplink residual timing deviation control word fed back by the mobile satellite, and completing uplink synchronization based on the uplink residual timing deviation control word.

In an optional embodiment of the present disclosure, the determining a synchronization header corresponding to each preset time unit of the second UE air interface data frame, based on the sampling point deviation value and the number of preset sampling points corresponding to each preset time unit of the base station air interface data frame received by the mobile satellite, includes:

in case that the distance between the UE and the mobile satellite decreases, adding the number of sampling points corresponding to the sampling point deviation value to a last OFDM symbol from the position of the synchronization header in each preset time unit, and setting the added sampling points to zero; and keeping the number of sampling points corresponding to other OFDM symbols and CP unchanged, thereby obtaining the synchronization header corresponding to each preset time unit; and/or,

in case that the distance between the UE and the mobile satellite increases, reducing the number of sampling points corresponding to the sampling point deviation value from the last OFDM symbol from the position of the synchronization header in each preset time unit, and keeping the number of sampling points corresponding to other OFDM symbols and CP unchanged, thereby obtaining the synchronization header corresponding to each preset time unit.

In an optional embodiment of the present disclosure, the method further includes:

performing phase compensation on each OFDM symbol in each preset time unit of the first UE air interface data frame that has gone downlink synchronization pre-compensation; and/or,
performing phase compensation on each OFDM symbol in each preset time unit of the second UE air interface data frame that has gone uplink synchronization pre-compensation.

In an optional embodiment of the present disclosure, the performing phase compensation on each OFDM symbol in each preset time unit, includes:

obtaining an average delay value corresponding to each OFDM symbol in each preset time unit based on an uplink synchronization pre-compensation value or a downlink synchronization pre-compensation value in each preset time unit;
obtaining a phase value to be compensated for each subcarrier in the frequency domain of each OFDM symbol, based on the average delay value; and performing phase compensation on the OFDM symbol in the frequency domain based on the phase value.

In an optional embodiment of the present disclosure, the method further includes:

performing Doppler pre-compensation on each preset time unit of the first UE air interface data frame that has undergone the downlink synchronization pre-compensation; and/or,
performing Doppler pre-compensation on each preset time unit of the second UE air interface data frame that has undergone the uplink synchronization pre-compensation.

In a second aspect, one embodiment of the present disclosure provides an uplink and downlink synchronization device for a mobile satellite communication system, including:

a sampling point deviation value obtaining module configured to obtain a sampling point deviation value between a user equipment (UE) and a mobile satellite within a preset time unit, based on ephemeris parameters of the mobile satellite and coordinates of the UE;
a downlink coarse synchronization module configured to perform downlink synchronization pre-compensation on a received first UE air interface data frame in each corresponding preset time unit based on the sampling point deviation value, and perform downlink coarse synchronization based on the first UE air interface data frame that has undergone the downlink synchronization pre-compensation;
an uplink synchronization module configured to obtain an uplink coarse synchronization parameter based on the downlink coarse synchronization parameter and a real-time distance between the UE and the mobile satellite; perform uplink synchronization pre-compensation on a to-be-transmitted second UE air interface data frame in each corresponding preset time unit, based on the sampling point deviation value; and perform uplink synchronization based on the second UE air interface data frame that has undergone the uplink synchronization pre-compensation, and the uplink coarse synchronization parameter.

In an optional embodiment of the present disclosure, the downlink coarse synchronization module is further configured to,

determine a synchronization header corresponding to each preset time unit of the first UE air interface data frame based on the sampling point deviation value and the number of preset sampling points in each preset time unit corresponding to a base station air interface data frame sent by the mobile satellite, thereby obtaining the first UE air interface data frame that has undergone downlink synchronization pre-compensation;
for each preset time unit, according to a position of corresponding synchronization header, take the sampling point corresponding to the preset time unit for baseband processing to obtain a synchronization signal block (SSB) signal; and
perform the downlink coarse synchronization based on a downlink synchronization parameter in the SSB signal.

In an optional embodiment of the present disclosure, the downlink coarse synchronization module is further configured to,

in case that the distance between the UE and the mobile satellite decreases, reduce the number of sampling points corresponding to the sampling point deviation value from a cyclic prefix (CP) of a first orthogonal frequency division multiplexing (OFDM) symbol from the position of the synchronization header in each preset time unit, and keep the number of sampling points corresponding to other OFDM symbols and CP unchanged, thereby obtaining the synchronization header corresponding to each preset time unit; and/or,
in case that the distance between the UE and the mobile satellite increases, add the number of sampling points corresponding to the sampling point deviation value to a last OFDM symbol from the position of the synchronization header in each preset time unit, and keep the number of sampling points corresponding to other OFDM symbols and CP unchanged, thereby obtaining the synchronization header corresponding to each preset time unit.

In an optional embodiment of the present disclosure, the downlink synchronization parameter includes a local frame index at a synchronization frame header position, a local slot index, downlink air interface frame index, a downlink air interface slot index, and a sampling point index value corresponding to downlink air interface slot; the downlink coarse synchronization module is further configured to,
take the downlink air interface frame index as the local frame index, take the downlink air interface slot index as the local slot index, and perform a next slot synchronization based on the sampling point index value corresponding to the downlink air interface slot.

In an optional embodiment of the present disclosure, the uplink synchronization module is further configured to,

obtain a first delay corresponding to the distance based on the real-time distance between the mobile satellite and the UE, and obtain a second delay and a third delay corresponding to the downlink coarse synchronization based on the downlink coarse synchronization parameter;

obtain an uplink air interface frame index and an uplink air interface slot frame index corresponding to a synchronization frame header position, and a sampling point index value corresponding to an uplink air interface slot, based on the first delay, the second delay and the third delay;

take the uplink air interface frame index as the local frame index at the synchronization frame header position, take the uplink air interface slot index as the local slot index at the synchronization frame header position, and perform a next slot synchronization based on the sampling point index value corresponding to the uplink air interface slot.

In an optional embodiment of the present disclosure, the uplink synchronization module is further configured to,

determine a synchronization header corresponding to each preset time unit of the second UE air interface data frame, based on the sampling point deviation value and the number of preset sampling points corresponding to each preset time unit of the base station air interface data frame received by the mobile satellite, thereby obtaining the second UE air interface data frame that has undergone the uplink synchronization pre-compensation; and

send an uplink synchronization signal to the mobile satellite based on the uplink frame index, uplink slot index and the synchronization header corresponding to each preset time unit of the uplink coarse synchronization parameter, and receive an uplink residual timing deviation control word fed back by the mobile satellite, and performing uplink synchronization based on the uplink residual timing deviation control word.

In an optional embodiment of the present disclosure, the uplink synchronization module is further configured to,

in case that the distance between the UE and the mobile satellite decreases, add the number of sampling points corresponding to the sampling point deviation value to a last OFDM symbol from the position of the synchronization header in each preset time unit, and set the added sampling points to zero; and keep the number of sampling points corresponding to other OFDM symbols and CP unchanged, thereby obtaining the synchronization header corresponding to each preset time unit; and/or,

in case that the distance between the UE and the mobile satellite increases, reduce the number of sampling points corresponding to the sampling point deviation value from the last OFDM symbol from the position of the synchronization header in each preset time unit, and keep the number of sampling points corresponding to other OFDM symbols and CP unchanged, thereby obtaining the synchronization header corresponding to each preset time unit.

In an optional embodiment of the present disclosure, the device further includes a phase compensation module configured to,

perform phase compensation on each OFDM symbol in each preset time unit of the first UE air interface data frame that has gone downlink synchronization pre-compensation; and/or,

perform phase compensation on each OFDM symbol in each preset time unit of the second UE air interface data frame that has gone uplink synchronization pre-compensation.

In an optional embodiment of the present disclosure, the phase compensation module is further configured to,

obtain an average delay value corresponding to each OFDM symbol in each preset time unit based on an uplink synchronization pre-compensation value or a downlink synchronization pre-compensation value in each preset time unit;

obtain a phase value to be compensated for each subcarrier in the frequency domain of each OFDM symbol, based on the average delay value; and performing phase compensation on the OFDM symbol in the frequency domain based on the phase value.

In an optional embodiment of the present disclosure, the device further includes a Doppler pre-compensation module configured to,

perform Doppler pre-compensation on each preset time unit of the first UE air interface data frame that has undergone the downlink synchronization pre-compensation; and/or,

perform Doppler pre-compensation on each preset time unit of the second UE air interface data frame that has undergone the uplink synchronization pre-compensation.

In a third aspect, one embodiment of the present disclosure provides an electronic device, including a memory, a processor, and a computer program stored in the memory and executable on the processor. The computer program, when executed by the processor, causes the processor to execute the method of the first aspect.

In a fourth aspect, one embodiment of the present disclosure provides a computer-readable storage medium, including a computer program stored thereon. The computer program, when executed by a processor, causes the processor to execute one or more methods in the embodiments of the present disclosure.

## BRIEF DESCRIPTION OF THE DRAWINGS

In order to explain the technical solutions in the embodiments of the present disclosure more clearly, drawings needed to be used in description of the embodiments of the present disclosure will be briefly introduced below.

FIG. 1 is a schematic flowchart of an uplink and downlink synchronization method for a mobile satellite communication system according to an embodiment of the present disclosure;

FIG. 2 is a schematic diagram showing that duration of a downlink frame is compressed in an example according to an embodiment of the present disclosure;

FIG. 3 is a schematic diagram showing that duration of a downlink frame is extended in an example according to an embodiment of the present disclosure;

FIG. 4 is a schematic diagram of an exemplary processing flow of an uplink and downlink synchronization solution for a mobile satellite communication system according to an embodiment of the present disclosure;

FIG. 5 is a schematic diagram of performing downlink synchronization pre-compensation on each preset time unit of a first user equipment (UE) air interface data frame in case that a mobile satellite is getting closer to a UE in an example according to an embodiment of the present disclosure;

FIG. 6 is a schematic diagram of performing downlink synchronization pre-compensation on each preset time unit of a first UE air interface data frame in case that a mobile satellite is getting father away from a UE in an example according to an embodiment of the present disclosure;

FIG. 7 is a schematic diagram of a downlink coarse synchronization process in an example according to an embodiment of the present disclosure;

FIG. 8 is a schematic diagram of an uplink coarse synchronization process in an example according to an embodiment of the present disclosure;

FIG. 9 is a schematic principle diagram of performing uplink synchronization pre-compensation on a second UE air interface data frame in case that a mobile satellite is getting closer to a UE in an example according to an embodiment of the present disclosure;

FIG. 10 is a schematic principle diagram of performing uplink synchronization pre-compensation on a second UE air interface data frame in case that a mobile satellite is getting farther away from a UE in an example according to an embodiment of the present disclosure;

FIG. 11 is a schematic diagram of performing uplink synchronization pre-compensation on each preset time unit of a second UE air interface data frame in case that a mobile satellite is getting closer to a UE in an example according to an embodiment of the present disclosure;

FIG. 12 is a schematic diagram of performing uplink synchronization pre-compensation on each preset time unit of a second UE air interface data frame in case that a mobile satellite is getting father away from a UE in an example according to an embodiment of the present disclosure;

FIG. 13 is a schematic diagram of an uplink and downlink synchronization device for a mobile satellite communication system according to an embodiment of the present disclosure; and

FIG. 14 is a schematic diagram of an electronic device according to an embodiment of the present disclosure.

## DETAILED DESCRIPTION

Embodiments of the present disclosure are described in detail hereinafter. Examples of the embodiments are shown in the accompanying drawings, and the same or similar reference numerals throughout represent the same or similar elements or elements with the same or similar functions. The embodiments described hereinafter with reference to the accompanying drawings are exemplary and are only used to explain the present disclosure and cannot be construed as limiting the present disclosure.

Those skilled in the art will understand that, unless expressly stated otherwise, the singular forms "a", "an" and "the" used herein may also include the plural forms. It should be further understood that the word "comprising" as used in the description of the present disclosure refers to the presence of features, integers, steps, operations, elements and/or components, but does not exclude the presence or addition of one or more other features, integers, steps, operations, elements, components and/or combinations thereof. It will be understood that when an element is described as being "connected" or "coupled" to another element, the element can be directly connected or coupled to the another element or an intervening element may also be present. Additionally, "connected" or "coupled" as used herein may include wireless connections or wireless couplings.

In various embodiments of the present disclosure, it is to be understood that sizes of sequence numbers of the following processes does not mean orders of execution. Execution order of each process should be determined by its functions and internal logic, and should not constitute any limitation on implementation process of the embodiment of the present disclosure. The terms "first", "second", and the like, in the description and claims are used to distinguish similar objects and are not used to describe a specific sequence or order. It is to be understood that data so used are interchangeable under appropriate circumstances so that embodiments of the present disclosure can be implemented in sequences other than those illustrated or described herein. In addition, "and/or" in the description and claims means at least one of connected objects, including all or any unit and all combinations of one or more associated listed items, the character "/", generally indicates that before and after related objects are in an "or" relationship.

In the embodiments of the present disclosure, it is to be understood that "B corresponding to A" means that B is associated with A, and B can be determined based on A. However, it is to be understood that determining B based on A does not mean determining B only based on A, and B can also be determined based on A and/or other information.

Furthermore, those skilled in the art will understand that, unless otherwise defined, all terms (including technical terms and scientific terms) used herein have the same meanings as commonly understood by one of ordinary skill in the art to which this invention belongs. It should also be understood that terms, such as those defined in general dictionaries, are to be understood to have meanings consistent with their meaning in the context of the related art, and are not to be interpreted in an idealized or overly formal sense unless specifically defined as herein.

The solutions provided in the embodiments of the present disclosure can be executed by any electronic device, such as a user equipment or a server. The server may be an independent physical server, or a server cluster or distributed system composed of multiple physical servers, or a cloud server that provides cloud computing services. The user equipment may be a smartphone, tablet, laptop, desktop computer, smart speaker, smart watch, etc., but is not limited to this. The user equipment and the server can be connected directly or indirectly through wired or wireless communication manner, which is not limited in the present disclosure. Regarding the technical problems existing in the related art, the uplink and downlink synchronization method and device for the mobile satellite communication system provided in the present disclosure are intended to solve at least one of the technical problems in the related art.

The technical solutions of the present disclosure and how the technical solutions of the present disclosure solve the above technical problems will be described in detail hereinafter with specific embodiments. The following specific embodiments can be combined with each other, and the same or similar concepts or processes may not be described again in some embodiments. Embodiments of the present disclosure will be described hereinafter with reference to the accompanying drawings.

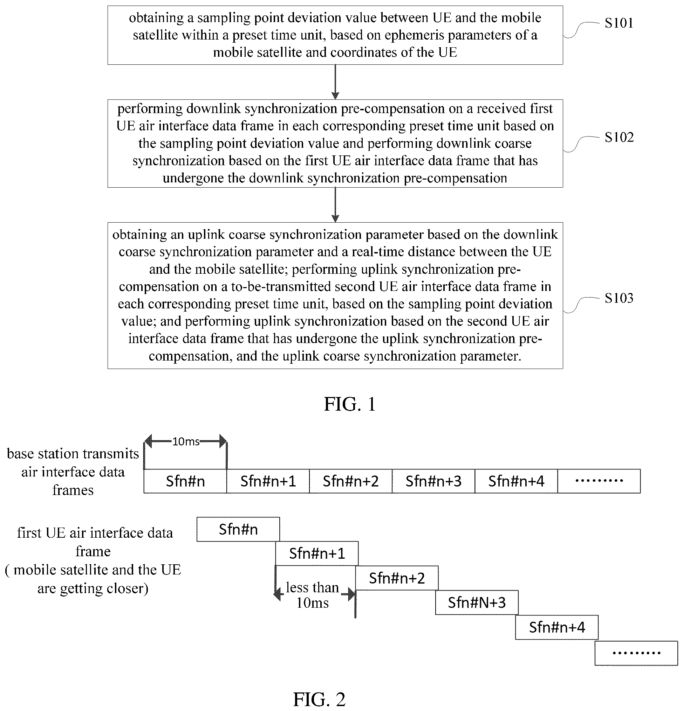

FIG. 1 is a schematic flowchart of an uplink and downlink synchronization method for a mobile satellite communication system according to an embodiment of the present disclosure. An execution entity of the method may be a corresponding user equipment (UE) in the mobile satellite communication system. As shown in FIG. 1, the method includes steps S101 to S103.

Step S101: obtaining a sampling point deviation value between the UE and the mobile satellite within a preset time unit, based on ephemeris parameters of a mobile satellite and coordinates of the UE.

The preset time unit is duration corresponding to one or more slots.

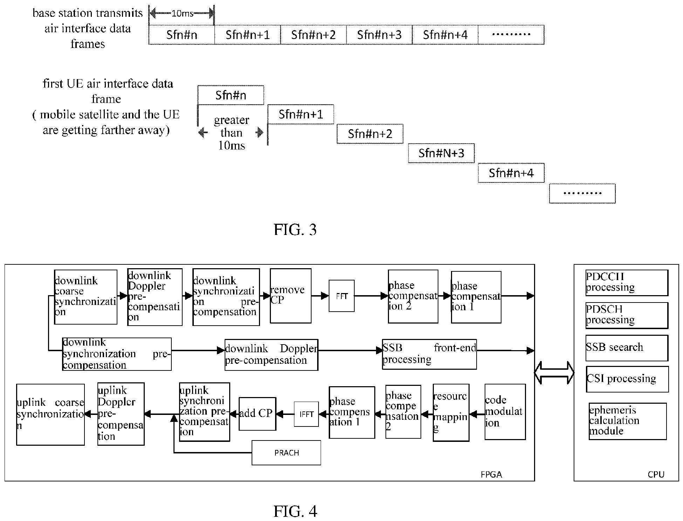

Specifically, due to high-speed relative motion between the mobile satellite (which can be understood as a base station in the mobile satellite communication system) and the UE, a path delay between the mobile satellite and the UE changes rapidly over time; if a baseband sampling rate of the UE remains unchanged, a physical frame duration of a baseband signal received by the UE will be different from that on the base station side (i.e., the mobile satellite side). When a distance between the mobile satellite and the UE is getting closer, each physical frame duration of a first UE air interface data frame received by the UE is shorter than a frame duration (10ms) on the base station side, as shown in FIG. 2. When the distance between the mobile satellite and the UE is getting farther, each physical frame duration of the first UE air interface data frame received by the UE is longer than the frame duration (10ms) on the base station side, as shown in FIG. 3. Because the baseband sampling rate of the UE remains unchanged, and an air interface frame duration may be compressed or extended, the UE baseband processing must pre-compensate for changes in the air interface frame duration. Otherwise, as time accumulates, downlink synchronization will be lost repeatedly, affecting performance indicators of the UE.

Similarly, during the uplink synchronization process, it is also necessary to pre-compensate for changes in the air interface frame duration to offset compression or extension of an uplink frame duration of an uplink signal introduced by changes in the relative distance between the mobile satellite and the UE, so that the air interface signal frame duration of the uplink signals reaching a receiver of the mobile satellite base station remains unchanged.

Before performing pre-compensation, it is necessary to obtain the sampling point deviation value between the UE and the mobile satellite within the preset time unit based on the ephemeris parameters of the mobile satellite and the coordinates of the UE.

Step S102: performing downlink synchronization pre-compensation on a received first UE air interface data frame in each corresponding preset time unit based on the sampling point deviation value and performing downlink coarse synchronization based on the first UE air interface data frame that has undergone the downlink synchronization pre-compensation.

Specifically, before performing the downlink coarse synchronization, the UE needs to perform downlink synchronization pre-compensation on the received first UE air interface data frame. The performing downlink synchronization pre-compensation on a received first UE air interface data frame in each corresponding preset time unit based on the sampling point deviation value, can be understood as re-determining a synchronization head and sampling point division of each preset time unit based on the sampling point deviation value. After obtaining the first UE air interface data frame that has undergone the downlink synchronization pre-compensation, the downlink coarse synchronization is performed based on the first UE air interface data frame that has undergone the downlink synchronization pre-compensation. For example, Doppler compensation can be performed based on the first UE air interface data frame that has undergone the downlink synchronization pre-compensation; then, data frames undergoing the Doppler compensation are used for SSB front-end processing; and then SSB search is performed, and a downlink coarse synchronization parameter is obtained according to the SSB search results, thereby performing the downlink coarse synchronization.

Step S103: obtaining an uplink coarse synchronization parameter based on the downlink coarse synchronization parameter and a real-time distance between the UE and the mobile satellite; performing uplink synchronization pre-compensation on a to-be-transmitted second UE air interface data frame in each corresponding preset time unit, based on the sampling point deviation value; and performing uplink synchronization based on the second UE air interface data frame that has undergone the uplink synchronization pre-compensation, and the uplink coarse synchronization parameter.

Specifically, in the mobile satellite communication system, the uplink coarse synchronization of the UE is different from the uplink coarse synchronization of the ground cellular network system. In the embodiment of the present disclosure, in the uplink coarse synchronization, the real-time distance between the mobile satellite and the UE can be calculated based on the ephemeris parameter, and the path delay can be further calculated, and uplink frame index and slot index are obtained by compensating for 2 times the path delay. The uplink synchronization in the mobile satellite communication system involves two operations: uplink coarse synchronization and uplink synchronization pre-compensation for the to-be-transmitted second UE air interface data frame. The performing uplink synchronization pre-compensation on a to-be-transmitted second UE air interface data frame in each corresponding preset time unit, based on the sampling point deviation value, can be understood as re-determining a synchronization header and sampling point division of each preset time unit based on the sampling point deviation value.

In the solution provided in the present disclosure, downlink synchronization pre-compensation and uplink synchronization pre-compensation are performed respectively according to the sampling point deviation value corresponding to the preset time unit, so that in case that the local baseband sampling rate of a satellite terminal remains unchanged, the baseband processing has less accumulated timing deviation, which reduces errors in frame index and slot index and the number of radio link failures. Meanwhile, the physical frame duration of uplink receptions of multiple users by the mobile satellite base station is almost fixed, thereby reducing interference of the uplink receptions between multiple users. This solution can be well applied to the uplink and downlink synchronization of the mobile satellite communication system.

FIG. 4 is a schematic diagram of an exemplary processing flow of an uplink and downlink synchronization solution for a mobile satellite communication system according to an embodiment of the present disclosure. As shown in FIG. 4, it shows a physical layer processing flow of the UE under an orthogonal frequency division multiplexing (OFDM) system. Compared with a physical layer processing flow of UE in the ground cellular network, this example adds uplink and downlink synchronization tracking pre-compensation (also referred as uplink synchronization pre-compensation and downlink synchronization pre-compensation), uplink and downlink synchronization Doppler pre-compensation, phase compensation 2, ephemeris calculation module, etc. Channel parameters obtained in a central processing unit (CPU) and related parameters of the ephemeris calculation module are configured to a field programmable gate array (FPGA) through an interface. The FPGA completes the frame index and slot index synchronization in the uplink and downlink coarse synchronization, completes the frame index and slot index synchronization in the uplink and downlink synchronization tracking pre-compensation, and phase compensation 2 and uplink and downlink Doppler pre-compensation. Phase compensation 1 is the same as the phase compensation of the ground cellular network, and it is necessary to compensate for a phase difference caused by inconsistent transmission and reception frequencies of the base station and the UE. The phase compensation 2 is a new processing module of the UE in the mobile satellite communication system. Each process in the above uplink and downlink synchronization process will be described in detail hereinafter.

In an optional embodiment of the present disclosure, during a communication process, downlink synchronization pre-compensation can be performed first, and then downlink Doppler pre-compensation can be performed, and then data that undergoes compensation can be used for SSB front-end processing. After completing the SSB search, the downlink coarse synchronization parameter can be obtained.

In the subsequent communication process, the data processing manner includes: performing downlink coarse synchronization on the first UE air interface data frame, performing downlink Doppler pre-compensation after the downlink coarse synchronization, and using a result of the downlink Doppler pre-compensation for further downlink synchronization pre-compensation and other operations.

The performing downlink synchronization pre-compensation on a received first UE air interface data frame in each corresponding preset time unit based on the sampling point deviation value and performing downlink coarse synchronization based on the first UE air interface data frame that has undergone the downlink synchronization pre-compensation, includes:

> based on the sampling point deviation value and the number of preset sampling points in each preset time unit corresponding to a base station air interface data frame sent by the mobile satellite, determining a synchronization header corresponding to each preset time unit of the first UE air interface data frame, thereby obtaining the first UE air interface data frame that has undergone downlink synchronization pre-compensation;
> for each preset time unit, according to a position of corresponding synchronization header, taking the sampling point corresponding to the preset time unit for baseband processing to obtain a synchronization signal block (SSB) signal; and
> performing downlink coarse synchronization based on a downlink synchronization parameter in the SSB signal.

Specifically, before performing the downlink coarse synchronization, the UE first needs to perform downlink synchronization pre-compensation on the received first UE air interface data frame. The downlink synchronization pre-compensation actually re-determines the number of synchronization headers and sampling points in each preset time unit (which may be recorded as $\Delta T$), based on the number of preset sampling points corresponding to the base station air interface data frame sent by the mobile satellite in each preset time unit and a sampling point deviation value corresponding to each preset time unit. After obtaining the first UE air interface data frame that has undergone the downlink synchronization pre-compensation, baseband processing is performed on the re-determined synchronization header and corresponding sampling points to obtain an SSB signal, and then downlink coarse synchronization is performed based on the SSB signal.

Specifically, the downlink synchronization pre-compensation can include the following steps.

Step 1: according to ephemeris parameters and coordinates of the UE, calculating in real time a sampling point deviation within a $\Delta T$ caused by relative motion change, thereby obtaining the sampling point deviation value within $\Delta T$.

Step 2: re-determining a synchronization head corresponding to each $\Delta T$ based on the sampling point deviation value within $\Delta T$; taking the sampling point corresponding to $\Delta T$ for baseband processing, each time according to a given synchronization head position. In some embodiments, the above operations may be implemented by a downlink synchronization tracking pre-compensation module of the UE.

Step 3: based on the synchronization header of each $\Delta T$, maintaining in real time downlink frame index and slot index, to ensure accuracy of the frame index and slot index in which the baseband processes data. In some embodiments, the above operations may be implemented by the downlink synchronization tracking pre-compensation module of the UE.

Further, in an optional embodiment of the present disclosure, based on the sampling point deviation value and the number of preset sampling points corresponding to a base station air interface data frame sent by the mobile satellite in each preset time unit, determining a synchronization header corresponding to the first UE air interface data frame in each preset time unit, includes:

> in case that a distance between the UE and the mobile satellite gradually decreases (that is, the distance between the two gets closer and closer), reducing the number of sampling points corresponding to the sampling point deviation value from a cyclic prefix (CP) of a first orthogonal frequency division multiplexing (OFDM) symbol from the synchronization header position in each preset time unit, and keeping the number of sampling points corresponding to other OFDM symbols and CP unchanged, thereby obtaining the synchronization header corresponding to each preset time unit; and/or,
> in case that the distance between the UE and the mobile satellite gradually increases (that is, the distance between the two becomes farther and farther), adding the number of sampling points corresponding to the sampling point deviation value to the last OFDM symbol from the synchronization header position in each preset time unit, and keeping the number of sampling points corresponding to other OFDM symbols and CP unchanged, thereby obtaining the synchronization header corresponding to each preset time unit.

Specifically, when performing the downlink synchronization pre-compensation, it can be divided into the following two situations.

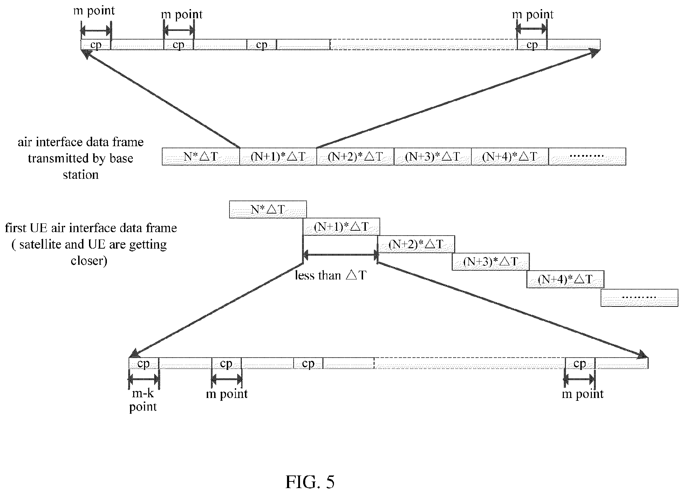

In a first situation, the baseband processing module of the UE takes the sampling point corresponding to ΔT according to the synchronization header position for baseband processing. In the scenario where the mobile satellite and the UE are getting closer and closer (that is, the distance between the UE and the mobile satellite is decreasing), the number of time domain data sampling points taken after synchronization of ephemeris information is less than a theoretical number of time domain data sampling points. At this point, according to the frame structure characteristics of the OFDM-based mobile satellite communication system, each OFDM symbol is processed at the baseband, and time domain data of each OFDM symbol is obtained by removing the CP. As shown in FIG. 5, CP of the first symbol within ΔT has k points less, while CPs of other OFDM symbols are of normal length.

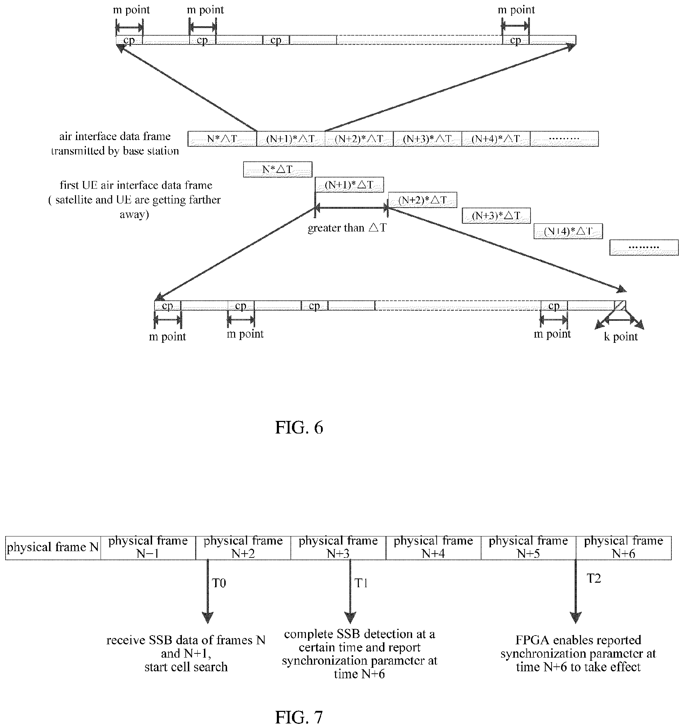

In a second situation, the baseband processing module of the UE takes the sampling point corresponding to ΔT according to the synchronization head position for baseband processing. In the scenario where the mobile satellite is getting farther and farther away from the UE (that is, the distance between the UE and the mobile satellite is increasing), the number of time domain data sampling points taken after synchronization of ephemeris information is greater than a theoretical number of time domain data sampling points. At this point, according to the frame structure characteristics of the OFDM-based mobile satellite communication system, each OFDM symbol is processed at the baseband, and time domain data of each OFDM symbol is obtained by removing the CP. Length of CP and data of each OFDM symbol are fixed, and the excess k sampling points are discarded. As shown in FIG. 6, the last k sampling points of the last OFDM symbol within ΔT will be discarded.

After completing the above downlink synchronization pre-compensation, the first UE air interface data frame that has undergone the downlink synchronization pre-compensation is obtained, and the corresponding SSB signal is obtained based on the first UE air interface data frame that has undergone the downlink synchronization pre-compensation. The downlink coarse synchronization of the UE in the mobile satellite communication system uses the SSB signal for downlink frame index synchronization. After the baseband completes the SSB capture, it needs to report the downlink synchronization parameter to the front-end FPGA. After the FPGA obtains the synchronization parameter, the FPGA synchronizes the downlink frame index.

The UE of the mobile satellite communication system may not know a start of a frame before the downlink coarse synchronization. The UE's frame synchronization module can first randomly assume a frame header position for frame synchronization. After frame synchronization, according to the frame header position and the downlink synchronization tracking value calculated based on the ephemeris, real-time synchronization adjustment is performed to complete frame synchronization and slot synchronization. The UE performs Doppler pre-compensation, and finally performs front-end filtering and down-sampling processing on the SSB signal, outputs a low sampling rate time domain data of the SSB to a SSB capture module, and outputs a local frame index corresponding to the time domain data.

In an optional embodiment of the present disclosure, the downlink synchronization parameter includes a local frame index at a synchronization frame header position, a local slot index, downlink air interface frame index, a downlink air interface slot index, and sampling point index value corresponding to downlink air interface slot.

The performing downlink coarse synchronization based on the downlink synchronization parameter in the SSB signal, includes:

taking the downlink air interface frame index as a local frame index, taking the downlink air interface slot index as a local slot index, and performing the next slot synchronization based on corresponding sampling point index value of the downlink air interface slot.

Specifically, as shown in FIG. 7, the SSB capture module of the UE receives down-sampled time domain data of SSB at a moment T0. After completing blind detection of SSB at a moment T1, a synchronization parameter at a moment T2 is calculated based on a result of SSB capture at the moment T1, and the synchronization parameter is reported to the FPGA. The FPGA updates the frame index and slot index at the moment T2 which is a first sampling point of the (N+6) frame, and re-maintains the downlink frame index synchronization.

Specifically, the synchronization parameter at the moment T2 include: a local frame index (local_sfn), local slot index (local_slot), downlink air interface frame index (dl_air_sfn), downlink air interface slot index (dl_air_slot) of the sampling point at the moment T2, and sampling point index value (dl_sym_offset) corresponding to the downlink air interface slot at the moment T2. At the moment T2, the FGPA needs to re-complete frame index synchronization, slot index synchronization, and slot header synchronization. The FPGA replaces the local frame index (local_sfn) with the downlink air interface frame index (dl_air_sfn), replaces the local slot index (local_slot) 0 with the air interface slot index (dl_air_slot), and performs new slot synchronization based on the sampling point index value (dl_sym_offset).

In an optional embodiment of the present disclosure, the obtaining an uplink coarse synchronization parameter based on the downlink coarse synchronization parameter and a real-time distance between the UE and the mobile satellite, includes:

based on the real-time distance between the mobile satellite and the UE, obtaining a first delay corresponding to the distance, and obtaining a second delay and a third delay corresponding to the downlink coarse synchronization based on the downlink coarse synchronization parameter;

based on the first delay, the second delay and the third delay, obtaining an uplink air interface frame index corresponding to the synchronization frame header position, an uplink air interface slot frame index and a sampling point index value corresponding to an uplink air interface slot;

taking the uplink air interface frame index as a local frame index at the synchronization frame header position, taking the uplink air interface slot index as a local slot index at the synchronization frame header position, and performing a next slot synchronization based on the sampling point index value corresponding to the uplink air interface slot.

Specifically, the UE may obtain an uplink coarse synchronization parameter before performing uplink pre-compensation. The uplink coarse synchronization of the UE in the mobile satellite communication system is different from the uplink coarse synchronization of the UE in the ground cellular network system. The uplink coarse synchronization of the UE in the mobile satellite communication system needs to calculate a distance between the mobile satellite and the UE in real time based on the ephemeris parameter, further calculate a path delay (i.e., DT0, the first delay), and then an uplink frame index and slot index are obtained by compensating for 2 times the path delay.

Specifically, the uplink coarse synchronization process is explained with an example of a scenario shown in FIG. The moment T2 is a frame header of FPGA downlink local initial maintenance, and is also a time point when the above downlink coarse synchronization takes effect, and is also a time point when the uplink coarse synchronization takes effect. The UE calculates DT1 (the second delay) and DT2 (the third delay) by using 2 times the path delay 2*DT0, the downlink air interface frame index (dl_air_sfn) and downlink air interface slot index (dl_air_slot) at the moment T2, and a sampling point index value (dl_sym_offset) corresponding to the downlink air interface slot at the moment T2. The UE finally calculates an uplink air interface frame index (ul_air_sfn) and an uplink air interface slot index (ul_air_slot) at the moment T2, and a sampling point index value (ul_sym_offset) corresponding to the uplink air interface slot at the moment T2.

At the moment T2, the FPGA takes effect for both the downlink and uplink coarse synchronization parameters. At the moment T2, the uplink air interface frame index (ul_air_sfn) is used to replace an frame index of uplink initial maintenance (i.e., the local frame index), and the uplink air interface slot index (ul_air_slot) is used to replace a slot index of uplink initial maintenance (i.e.,

local slot number) 0, and a slot header of the next slot is synchronized according to the sampling point index value (ul_sym_offset) corresponding to the uplink air interface slot index (ul_air_slot).

After obtaining the uplink coarse synchronization parameter, an uplink synchronization signal (uplink synchronization pre-compensation is required before transmission, which will be explained in detail later) can be transmitted according to the maintained uplink frame index and slot index; and the base station feeds back a residual timing deviation control word of transmission of the uplink synchronization signal, and then performs more accurate uplink synchronization based on an uplink timing control word.

For example, referring to FIG. 4, in some embodiments, the uplink coarse synchronization may include processing an uplink signal according to the uplink coarse synchronization parameter (for example, maintained uplink index and slot index). In some embodiments, the uplink coarse synchronization may sometimes include obtaining the uplink coarse synchronization parameter.

In an optional embodiment of the present disclosure, the performing uplink synchronization pre-compensation on a to-be-transmitted second UE air interface data frame in each corresponding preset time unit, based on the sampling point deviation value; and performing uplink synchronization based on the second UE air interface data frame that has undergone the uplink synchronization pre-compensation, and the uplink coarse synchronization parameter, includes:

based on the sampling point deviation value and the number of preset sampling points corresponding to each preset time unit of the base station air interface data frame received by the mobile satellite, determining a synchronization header corresponding to each preset time unit of the second UE air interface data frame, thereby obtaining the second UE air interface data frame that has undergone the uplink synchronization pre-compensation;

based on the uplink frame index, uplink slot index and the synchronization header corresponding to each preset time unit of the uplink coarse synchronization parameter, sending an uplink synchronization signal to the mobile satellite, and receiving an uplink residual timing deviation control word fed back by the mobile satellite, and completing uplink synchronization based on the uplink residual timing deviation control word.

Specifically, after the uplink coarse synchronization is completed, more precise uplink synchronization can be performed by transmitting a synchronization signal. The uplink of the UE in the mobile satellite communication system also needs to calculate in real time an uplink synchronization adjustment value based on the ephemeris according to the distance change between the satellite and the UE, and perform uplink synchronization pre-compensation. Through the uplink synchronization pre-compensation, the compression or extension of an uplink frame duration of an uplink interface signal introduced by changes in the relative distance between the mobile satellite and the UE, so that the air interface signal frame duration of the uplink signals reaching a receiver of the mobile satellite base station remains unchanged.

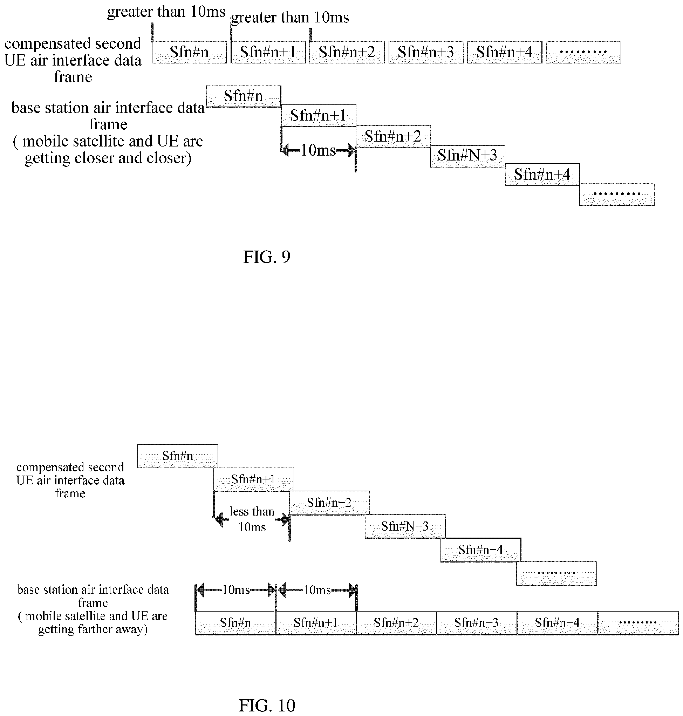

In principle, the principles of the uplink synchronization pre-compensation and downlink synchronization pre-compensation are similar, and operations of the two correspond to each other. As shown in FIG. 9, when the distance between the mobile satellite and the UE are getting closer and closer, the uplink synchronization pre-compensation needs to extend an air interface frame for transmission to offset the air interface frame compression introduced during the uplink air interface transmission process. When the distance between the mobile satellite and the UE are getting further and further away, as shown in FIG. 10, the uplink synchronization pre-compensation needs to compress the air interface frame for transmission to offset the air interface frame extension introduced during the uplink air interface transmission process.

Specifically, the uplink synchronization pre-compensation can include the following steps.

Step 1: according to ephemeris parameters and coordinates of the UE, calculating in real time a sampling point deviation within a $\Delta T$ caused by relative motion change, thereby obtaining the sampling point deviation value within $\Delta T$. Here, $\Delta T$ has the same value as the downlink $\Delta T$.

Step 2: re-determining a synchronization header corresponding to each $\Delta T$ based on the sampling point deviation value within $\Delta T$; and baseband processing performs transmission according to a given synchronization header position each time. In some embodiments, the above operations may be implemented by an uplink synchronization tracking pre-compensation module of the UE.

Step 3: based on the synchronization header of each $\Delta T$, maintaining in real time the downlink frame index and slot index, to ensure accuracy of the frame index and slot index in which the baseband processes data. In some embodiments, the above operations may be implemented by the uplink synchronization tracking pre-compensation module of the UE.

Further, in an optional embodiment of the present disclosure, based on the sampling point deviation value and the number of preset sampling points corresponding to each preset time unit of the base station air interface data frame received by the mobile satellite, determining a synchronization header corresponding to each preset time unit of the second UE air interface data frame, includes:

in case that a distance between the UE and the mobile satellite decreases, adding the number of sampling points corresponding to the sampling point deviation value to the last OFDM symbol from the synchronization header position in each preset time unit, and keeping the number of sampling points corresponding to other OFDM symbols and CP unchanged, thereby obtaining the synchronization header corresponding to each preset time unit;

in case that the distance between the UE and the mobile satellite increases, reducing the number of sampling points corresponding to the sampling point deviation value from the last OFDM symbol from the synchronization header position in each preset time unit, and keeping the number of sampling points corresponding to other OFDM symbols and CP unchanged, thereby obtaining the synchronization header corresponding to each preset time unit.

Specifically, when performing the uplink synchronization pre-compensation, similar to the downlink synchronization pre-compensation, it can also be divided into the following two situations.

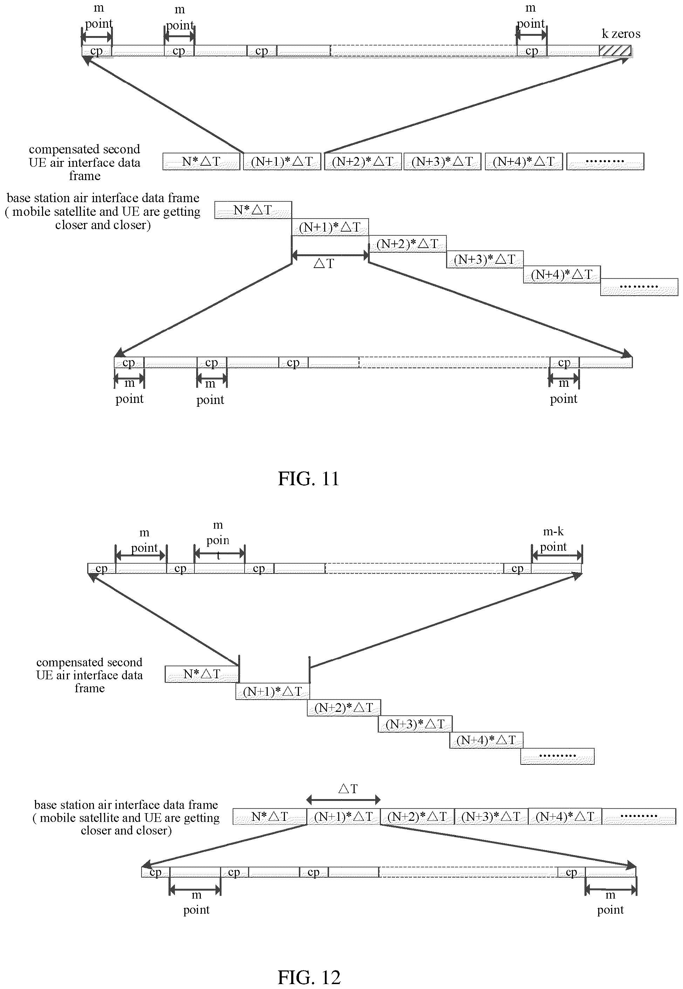

In a first situation, the baseband processing module of the UE performs transmission according to the synchronization header position. In the scenario where the mobile satellite and the UE are getting closer and closer (that is, the distance between the UE and the mobile satellite is decreasing), after the uplink synchronization pre-compensation, the number of baseband transmission time domain data sampling points is greater than a theoretical number of time domain data sampling points. At this point, according to the frame structure characteristics of the OFDM-based mobile satellite communication system, 0 is added at an end of the last transmitted OFDM symbol. As shown in FIG. 11, the last OFDM symbol in $\Delta T$ is filled with 0.

In a second situation, the baseband processing module of the UE performs transmission according to the synchronization header position. In the scenario where the mobile satellite is getting farther and farther away from the UE (that is, the distance between the UE and the mobile satellite is increasing), after the uplink synchronization pre-compensation, the number of baseband transmission time domain data sampling points is less than a theoretical number of time domain data sampling points. At this point, according to the frame structure characteristics of the OFDM-based mobile satellite communication system, fewer sampling points are sent in the last transmitted OFDM symbol. As shown in FIG. 12, K fewer sampling points are sent in the last symbol in $\Delta T$.

In an optional embodiment of the present disclosure, the method may further include:

performing phase compensation on each OFDM symbol in each preset time unit of the first UE air interface data frame that has gone downlink synchronization pre-compensation; and/or,
performing phase compensation on each OFDM symbol in each preset time unit of the second UE air interface data frame that has gone uplink synchronization pre-compensation.

Specifically, since the UE of the mobile satellite communication system requires synchronization pre-compensation in both the uplink and downlink, according to the above uplink and downlink synchronization pre-compensation solutions, these solutions all perform centralized discarding or zero-filling operations within the preset time unit $\Delta T$. Since the timing deviation of each symbol within $\Delta T$ is different, deviation of $\Delta T$ is a result of gradual accumulation of each symbol. Therefore, the centralized discarding or zero-filling within the preset time unit $\Delta T$ will result in a different phase difference to each resource element (RE) of each symbol in the frequency domain. The later symbol in $\Delta T$ introduces a greater frequency domain phase difference. Therefore, it is necessary to perform phase compensation on each symbol within $\Delta T$ (i.e., corresponding phase compensation 2), that is, performing phase compensation on each RE of frequency domain data of each symbol, thereby avoiding degradation of demodulation performance of the channel.

Specifically, in an optional embodiment of the present disclosure, based on the sampling point deviation value and the number of preset sampling points corresponding to each preset time unit of the base station air interface data frame received by the mobile satellite, determining a synchronization header corresponding to each preset time unit of the second UE air interface data frame, includes:

for a situation where the distance between the UE and the mobile satellite decreases, adding the number of sampling points corresponding to the sampling point deviation value to the last OFDM symbol from the synchronization header position in each preset time unit, and setting the added sampling points to zero; and keeping the number of sampling points corresponding to other OFDM symbols and CP unchanged, thereby obtaining the synchronization header corresponding to each preset time unit;

for the situation where the distance between the UE and the mobile satellite increases, reducing the number of sampling points corresponding to the sampling point deviation value from the last OFDM symbol from the synchronization header position in each preset time unit; and keeping the number of sampling points corresponding to other OFDM symbols and CP unchanged, thereby obtaining the synchronization header corresponding to each preset time unit.

It is assumed that there are M symbols in $\Delta T$, a length of each symbol after FFT is L, and a timing deviation of $\Delta T$ is P (positive or negative) sampling points. Then, for an K-th (K range from 1 to M) symbol in $\Delta T$, the formula for coefficients that need to be compensated for frequency domain data after completing L-point FFT is:

$$exp(-j * 2 * pi * K * P * [0 : L - 1] / (M * L))$$

where j represents an imaginary unit, and *pi* represents circle ratio $\pi$. The physical meaning represented by this formula is that the timing deviation of averaging P points of accumulated deviation of $\Delta T$ to M symbols in $\Delta T$ unit time is K*P/M, and this symbol timing deviation K*P/M corresponds to a carrier phase value in the frequency domain which is in a range of [0:L-1].

In an optional embodiment of the present disclosure, the method may further include:

performing Doppler pre-compensation on each preset time unit of the first UE air interface data frame that has undergone the downlink synchronization pre-compensation; and/or,

performing Doppler pre-compensation on each preset time unit of the second UE air interface data frame that has undergone the uplink synchronization pre-compensation. In another optional embodiment of the present disclosure, the method may further include the following operations:

after the downlink coarse synchronization and before the downlink synchronization pre-compensation, performing Doppler pre-compensation on each preset time unit of the first UE air interface data frame; and/or,

after the uplink synchronization pre-compensation and before the uplink coarse synchronization, performing Doppler pre-compensation on each preset time unit of the second UE air interface data frame.

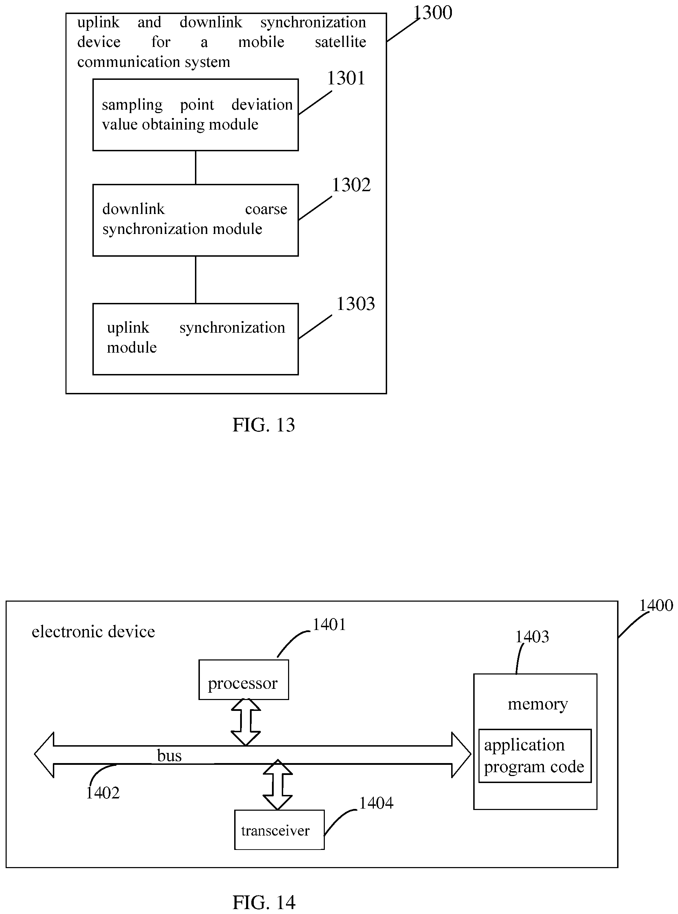

FIG. 13 is a schematic diagram of an uplink and downlink synchronization device for a mobile satellite communication system according to an embodiment of the present disclosure. As shown in FIG. 13, the device 1300 may include: a sampling point deviation value obtaining module 1301, a downlink coarse synchronization module 1302, and an uplink synchronization module 1303.

The sampling point deviation value obtaining module 1301 is used to obtain a sampling point deviation value between the UE and the mobile satellite within a preset time unit based on ephemeris parameters of a mobile satellite and coordinates of the UE.

The downlink coarse synchronization module 1302 is used to perform downlink synchronization pre-compensation on a received first UE air interface data frame in each corresponding preset time unit based on the sampling point deviation value and perform downlink coarse synchronization based on the first UE air interface data frame that has undergone the downlink synchronization pre-compensation.

The uplink synchronization module 1303 is used to obtain an uplink coarse synchronization parameter based on the downlink coarse synchronization parameter and a real-time distance between the UE and the mobile satellite; perform uplink synchronization pre-compensation on a to-be-transmitted second UE air interface data frame in each corresponding preset time unit, based on the sampling point deviation value; and perform uplink synchronization based on the second UE air interface data frame that has undergone the uplink synchronization pre-compensation, and the uplink coarse synchronization parameter.

In an optional embodiment of the present disclosure, the downlink coarse synchronization module is specifically used to,

based on the sampling point deviation value and the number of preset sampling points corresponding to a base station air interface data frame sent by the mobile satellite in each preset time unit, determine a synchronization header corresponding to each preset time unit of the first UE air interface data frame, thereby obtaining the first UE air interface data frame that has undergone downlink synchronization pre-compensation;

for each preset time unit, according to a position of corresponding synchronization header, take the sampling point corresponding to the preset time unit for baseband processing to obtain a synchronization signal block (SSB) signal; and

perform downlink coarse synchronization based on a downlink synchronization parameter in the SSB signal.

In an optional embodiment of the present disclosure, the downlink coarse synchronization module is further used to,

in case that a distance between the UE and the mobile satellite gradually decreases, reduce the number of sampling points corresponding to the sampling point deviation value from a cyclic prefix (CP) of a first orthogonal frequency division multiplexing (OFDM) symbol from the synchronization header position in each preset time unit, and keep the number of sampling points corresponding to other OFDM symbols and CP unchanged, thereby obtaining the synchronization header corresponding to each preset time unit;

in case that the distance between the UE and the mobile satellite gradually increases, adding the number of sampling points corresponding to the sampling point deviation value to the last OFDM symbol from the synchronization header position in each preset time unit, and keeping the number of sampling points corresponding to other OFDM symbols and CP unchanged, thereby obtaining the synchronization header corresponding to each preset time unit.

In an optional embodiment of the present disclosure, the downlink synchronization parameter includes a local frame index at the synchronization frame header position, a local slot index, a downlink air interface frame index, a downlink air interface slot index, and a sampling point index value corresponding to the downlink air interface slot.

The downstream coarse synchronization module is further used to:
take the downlink air interface frame index as a local frame index, take the downlink air interface slot index as a local slot index, and perform the next slot synchronization based on corresponding sampling point index value of the downlink air interface slot.

In an optional embodiment of the present disclosure, the uplink synchronization module is specifically used to:

based on the real-time distance between the mobile satellite and the UE, obtain a first delay corresponding to the distance, and obtain a second delay and a third delay corresponding to the downlink coarse synchronization based on the downlink coarse synchronization parameter;

based on the first delay, the second delay and the third delay, obtain an uplink air interface frame index corresponding to the synchronization frame header position, an uplink air interface slot frame index and a sampling point index value corresponding to an uplink air interface slot;

take the uplink air interface frame index as a local frame index at the synchronization frame header position, use the uplink air interface slot index as a local slot index at the synchronization frame header position, and perform a next slot synchronization based on the sampling point index value corresponding to the uplink air interface slot.

In an optional embodiment of the present disclosure, the uplink synchronization module is specifically used to,

based on the sampling point deviation value and the number of preset sampling points corresponding to each preset time unit of the base station air interface data frame received by the mobile satellite, determine a synchronization header corresponding to each preset time unit of the second UE air interface data frame, thereby obtaining the second UE air interface data frame that has undergone the uplink synchronization pre-compensation;

based on the uplink frame index, uplink slot index and the synchronization header corresponding to each preset time unit of the uplink coarse synchronization parameter, send an uplink synchronization signal to the mobile satellite, and receive an uplink residual timing deviation control word fed back by the mobile satellite, and complete uplink synchronization based on the uplink residual timing deviation control word.

In an optional embodiment of the present disclosure, the uplink synchronization module is further used to,

in case that a distance between the UE and the mobile satellite decreases, add the number of sampling points corresponding to the sampling point deviation value to the last OFDM symbol from the synchronization header position in each preset time unit, and set the added sampling points to zero; and keep the number of sampling points corresponding to other OFDM symbols and CP unchanged, thereby obtaining the synchronization header corresponding to each preset time unit; and/or, in case that the distance between the UE and the mobile satellite increases, reducing the number of sampling points corresponding to the sampling point deviation value from the last OFDM symbol from the synchronization header position in each preset time unit, and keep the number of sampling points corresponding to other OFDM symbols and CP unchanged, thereby obtaining the synchronization header corresponding to each preset time unit.

In an optional embodiment of the present disclosure, the device further includes a phase compensation module used to,

perform phase compensation on each OFDM symbol in each preset time unit of the first UE air interface data frame that has gone downlink synchronization pre-compensation; and/or, perform phase compensation on each OFDM symbol in each preset time unit of the second UE air interface data frame that has gone uplink synchronization pre-compensation.

In an optional embodiment of the present disclosure, the phase compensation module is specifically used to,

based on the uplink synchronization pre-compensation value or downlink synchronization pre-compensation value in each preset time unit, obtain an average delay value corresponding to each OFDM symbol in each preset time unit; based on the average delay value, obtain a phase value required to be compensated for each subcarrier in the frequency domain of each OFDM symbol, and perform phase compensation on the OFDM symbol in the frequency domain based on the phase value.

In an optional embodiment of the present disclosure, the device further includes a Doppler pre-compensation module used to,

perform Doppler pre-compensation on each preset time unit of the first UE air interface data frame that has undergone the downlink synchronization pre-compensation; and/or, perform Doppler pre-compensation on each preset time unit of the second UE air interface data frame that has undergone the uplink synchronization pre-compensation.

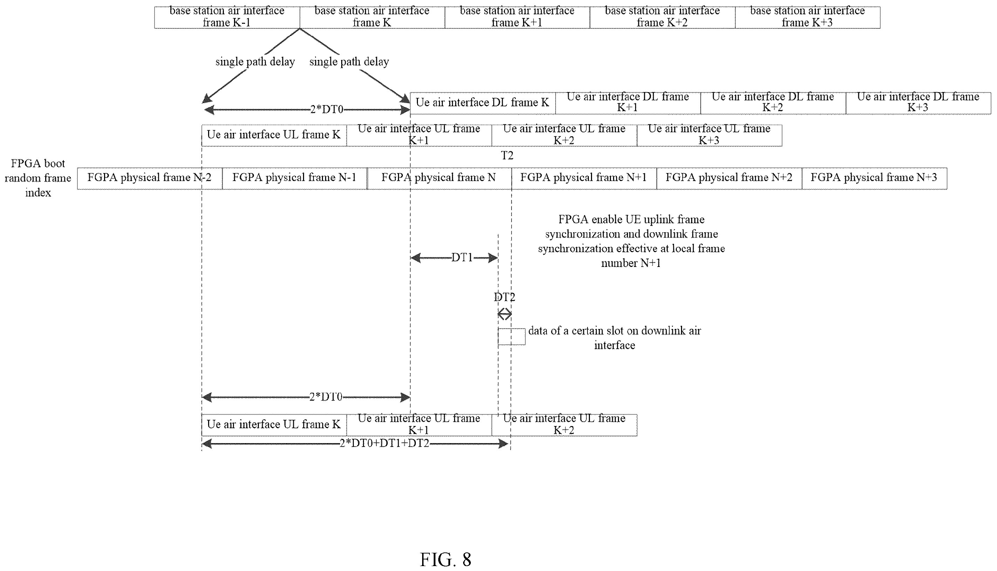

The uplink and downlink synchronization device for the mobile satellite communication system provided in the embodiments of the present disclosure can implement various processes implemented in the method embodiments described above in conjunction with FIG. 1 to FIG. 12, which will not be described again here to avoid repetition.

According to the solution provided in the present disclosure, downlink synchronization pre-compensation and uplink synchronization pre-compensation are performed respectively according to the sampling point deviation value corresponding to the preset time unit, so that in case that the local baseband sampling rate of a satellite terminal remains unchanged, the baseband processing has less accumulated timing deviation, which reduces errors in frame index and slot index and the number of radio link failures. Meanwhile, the physical frame duration of uplink receptions of multiple users by the mobile satellite base station is almost fixed, thereby reducing interference of the uplink receptions between multiple users. This solution can be well applied to the uplink and downlink synchronization of the mobile satellite communication system.

The uplink and downlink synchronization device for the mobile satellite communication system in the embodiment of the present disclosure can execute the uplink and downlink synchronization method for the mobile satellite communication system provided in the embodiment of the present disclosure, and their implementation principles are similar. Actions performed by each module and unit in the uplink and downlink synchronization device for the mobile satellite communication system in each embodiment of the present disclosure are corresponding to the steps in the uplink and downlink synchronization method for the mobile satellite communication system in each embodiment of the present disclosure. Detailed functional description of each module in the uplink and downlink synchronization device for the mobile satellite communication system, can refer to the description of the corresponding uplink and downlink synchronization method for the mobile satellite communication system shown above, which will not be repeated here.

Based on the same principle as the method shown in the embodiment of the present disclosure, one embodiment of the present disclosure further provides an electronic device, which may include but is not limited to: a processor and a memory. The memory is used to store a computer program. The processor is used to call the computer program to execute the uplink and downlink synchronization method for the mobile satellite communication system shown in any optional embodiment of the present disclosure. Compared with the related art, the uplink and downlink synchronization method for the mobile satellite communication system provided in the present disclosure performs downlink synchronization pre-compensation and uplink synchronization pre-compensation respectively according to the sampling point deviation value corresponding to the preset time unit, so that in case that the local baseband sampling rate of a satellite terminal remains unchanged, the baseband processing has less accumulated timing deviation, which reduces errors in frame index and slot index and the number of radio link failures. Meanwhile, the physical frame duration of uplink receptions of multiple users by the mobile satellite base station is almost fixed, thereby reducing interference of the uplink receptions between multiple users. This solution can be well applied to the uplink and downlink synchronization of the mobile satellite communication system.

In an optional embodiment, an electronic device is further provided, as shown in FIG. 14. The electronic device 1400 shown in FIG. 14 can be a server, including: a processor 1401 and a memory 1403. The processor 1401 and the memory 1403 are connected, such as through a bus 1402. Optionally, the electronic device 1400 may also include a transceiver 1404. It is to be noted that in practical applications, the number of transceivers 1404 is not limited to one, and the structure of the electronic device 1400 does not constitute a limitation on the embodiments of the present disclosure.

The processor 1401 may be a central processing unit (CPU), a general-purpose processor, a data signal processor (DSP), an application specific integrated circuit (ASIC), or a field programmable gate array (FPGA) or other programmable logic devices, transistor logic devices, hardware components, or any combination thereof. It may implement or execute the various illustrative logical blocks, modules and circuits described in the present disclosure. The processor 1401 may also be a combination that implements computing functions, such as a combination of one or more microprocessors, a combination of a DSP and a microprocessor, etc.

The bus 1402 may include a path that transmits information between the above components. The bus 1402 may be a peripheral component interconnect (PCI) bus or an extended industry standard architecture (EISA) bus, or the like. The bus 1402 can be divided into an address bus, a data bus, a control bus, etc. For ease of expression, only one thick line is used to represent the bus in FIG. 14, but it does not mean that there is only one bus or one type of bus.

The memory 1403 may be a read only memory (ROM) or other types of static storage devices that can store static information and instructions, or a random access memory (RAM) or other types of dynamic storage devices that can store information and instructions, and may also be an electrically erasable programmable read only memory (EEPROM0), compact disc read only memory (CD-ROM) or other optical disk storage, optical disk storage (including compressed optical disc, laser disc, optical disc, digital versatile disc, blu-ray disc, etc.), magnetic disk storage medium or other magnetic storage device, or may be any other medium that can be used to carry or store desired program code in the form of instructions or data structures and can be accessed by a computer, but is not limited to this.

The memory 1403 is used to store application program codes for executing the solution of the present disclosure, and is controlled by the processor 1401 for execution. The processor 1401 is used to execute the application program code stored in the memory 1403 to implement contents shown in the foregoing method embodiments.

The electronic device includes but is not limited to, a mobile terminal such as a mobile phone, a notebook computer, a digital broadcast receiver, a personal digital assistant (PDA), a tablet computer (PAD), a portable multimedia player (PMP), a vehicle-mounted terminal (such as a vehicle-mounted navigation terminal), or a fixed terminal such as digital TV, desktop computer, etc. The electronic device shown in FIG. 14 is only an example and should not impose any limitations on the functions and scope of the embodiments of the present disclosure.

The server provided in the present disclosure may be an independent physical server, or a server cluster or distributed system composed of multiple physical servers, or may be a cloud server that provides basic cloud computing services such as cloud service, cloud mobile communication, cloud computing, cloud function, cloud storage, network service, cloud communication, middleware service, domain name service, security service, CDN, as well as big data and artificial intelligence platform. The user equipment may be a smart phone, a tablet computer, a laptop computer, a desktop computer, a smart speaker, a smart watch, etc., but is not limited thereto. The user equipment and the server may be directly or indirectly connected via wired or wireless communication, which is not limited in the present disclosure.

One embodiment of the present disclosure provides a computer-readable storage medium. The computer-readable storage medium stores a computer program. The computer program, when executed on a computer, causes the computer to execute the corresponding content in the foregoing method embodiments. In some embodiments, the computer-readable storage medium is a non-transitory computer-readable storage medium.

It is to be understood that although various steps in the flowchart of the accompanying drawings are shown in sequence as indicated by arrows, these steps are not necessarily performed in the order indicated by arrows. Unless explicitly stated in the present disclosure, the execution of these steps is not strictly limited in order, and they can be executed in other orders. Further, at least some of the steps in the flowchart of the accompanying drawings may include multiple sub-steps or multiple stages. These sub-steps or stages are not necessarily executed at the same time, but may be executed at different times, and their execution order is not necessarily sequential, but can be performed in turn or alternately with other steps or at least part of the sub-steps or stages of other steps.

It is to be noted that the computer-readable medium mentioned above in the present disclosure may be a computer-readable signal medium or a computer-readable storage medium, or any combination thereof. The computer-readable storage medium may be, for example, but is not limited to, an electrical, magnetic, optical, electromagnetic, infrared, or semiconductor system, apparatus or device, or any combination thereof. More specific examples of the computer readable storage media may include, but are not limited to: an electrical connection having one or more wires, a portable computer disk, a hard drive, a random access memory (RAM), a read only memory (ROM), an erasable programmable read-only memory (EPROM or Flash), a fiber optic, a portable compact disk read-only memory (CD-ROM), an optical storage device, a magnetic storage device, or any suitable combination thereof. In the present disclosure, the computer-readable storage medium may be any tangible medium that contains or stores a program for use by or in connection with an instruction execution system, apparatus, or device. In the present disclosure, the computer-readable signal medium may include a data signal propagated in baseband or as part of a carrier wave, carrying computer-readable program code therein. Such propagated data signals may take many forms, including but not limited to electromagnetic signals, optical signals, or any suitable combination thereof. The computer-readable signal medium may also be any computer-readable medium other than the computer-readable storage medium, and the computer-readable signal medium can send, propagate, or transmit a program for use by or in connection with an instruction execution system, apparatus, or device. The program code embodied on the computer-readable medium may be transmitted using any suitable medium, including but not limited to: wire, optical cable, radio frequency (RF), etc., or any suitable combination thereof.

The above computer-readable medium may be included in the above electronic device, or may also exist independently without being assembled into the electronic device.

The computer-readable medium carries one or more programs. When the one or more programs are executed by the electronic device, the electronic device performs the method shown in the above embodiment.

According to one aspect of the present disclosure, a computer program product or a computer program is provided. The computer program product or computer program includes computer instructions stored in a computer-readable storage medium. A processor of a computer device reads the computer instructions from the computer-readable storage medium, and the processor executes the computer instructions to cause the computer device to perform the uplink and downlink synchronization method for the mobile satellite communication system provided in the above various optional implementations.

Computer program codes for performing the operations of the present disclosure may be written in one or more programming languages, including object-oriented programming languages such as Java, Smalltalk, C++, and conventional procedural programming language such as "C" or a similar programming language. The program code may execute entirely on a user's computer, partly on the user's computer, as a stand-alone software package, partly on the user's computer and partly on a remote computer, or entirely on the remote computer or server. In situations involving remote computers, the remote computer can be connected to the user's computer through any kind of network, including a local area network (LAN) or a wide area network (WAN), or can be connected to an external computer (such as though internet connection provided by an internet service provider).

The flow chart and block diagram in the accompanying drawings illustrate the possible architecture, function and operation of the system, method and computer program product according to various embodiments of the present disclosure. In this regard, each box in the flowchart or block diagram can represent a module, a program segment or a part of codes, and the module, the program segment or a part of the codes contains one or more executable instructions for realizing a specified logical function. It should also be noted that in some implementations as replacements, functions marked in the box can also occur in a sequence different from that marked in the accompanying drawings. For example, two boxes represented in succession may actually be executed substantially in parallel, or they may sometimes be executed in an opposite order, which depends on the functions involved. It should also be noted that each box in the block diagram and/or flowchart, and the combination of the boxes in the block diagram and/or flowchart can be implemented with a dedicated hardware-based system that performs a specified function or operation, or can be implemented with a combination of dedicated hardware and computer instructions.

The modules involved in the embodiments of the present disclosure can be implemented in software or hardware. Name of the module does not constitute a limitation on the module itself under certain circumstances. For example, the sampling point deviation value obtaining module may also be described as "a module for obtaining a sampling point deviation value".

The above description is only a preferred embodiment of the present disclosure and an explanation of the used technical principles. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept, for example, a technical solution formed by replacing the above features with (but not limited to) technical features with similar functions disclosed in this disclosure.

## Claims

1. An uplink and downlink synchronization method for a mobile satellite communication system, comprising:

> obtaining a sampling point deviation value between a user equipment (UE) and a mobile satellite within a preset time unit, based on ephemeris parameters of the mobile satellite and coordinates of the UE;
> performing downlink synchronization pre-compensation on a received first UE air interface data frame in each corresponding preset time unit based on the sampling point deviation value, and performing downlink coarse synchronization based on the first UE air interface data frame that has undergone the downlink synchronization pre-compensation; and
> obtaining an uplink coarse synchronization parameter based on the downlink coarse synchronization parameter and a real-time distance between the UE and the mobile satellite; performing uplink synchronization pre-compensation on a to-be-transmitted second UE air interface data frame in each corresponding preset time unit, based on the sampling point deviation value; and performing uplink synchronization based on the second UE air interface data frame that has undergone the uplink synchronization pre-compensation, and the uplink coarse synchronization parameter.

2. The method according to claim 1, wherein the performing downlink synchronization pre-compensation on a received first UE air interface data frame in each corresponding preset time unit based on the sampling point deviation value, and performing downlink coarse synchronization based on the first UE air interface data frame that has undergone the downlink synchronization pre-compensation, includes:

> determining a synchronization header corresponding to each preset time unit of the first UE air interface data frame based on the sampling point deviation value and the number of preset sampling points in each preset time unit corresponding to a base station air interface data frame sent by the mobile satellite, thereby obtaining the first UE air interface data frame that has undergone downlink synchronization pre-compensation;
for each preset time unit, according to a position of corresponding synchronization header, taking the sampling point corresponding to the preset time unit for baseband processing to obtain a synchronization signal block (SSB) signal; and
performing the downlink coarse synchronization based on a downlink synchronization parameter in the SSB signal.

3. The method according to claim 2, wherein the determining a synchronization header corresponding to each preset time unit of the first UE air interface data frame based on the sampling point deviation value and the number of preset sampling points in each preset time unit corresponding to a base station air interface data frame sent by the mobile satellite, includes:

> in case that the distance between the UE and the mobile satellite decreases, reducing the number of sampling points corresponding to the sampling point deviation value from a cyclic prefix (CP) of a first orthogonal frequency division multiplexing (OFDM) symbol from the position of the synchronization header in each preset time unit, and keeping the number of sampling points corresponding to other OFDM symbols and CP unchanged, thereby obtaining the synchronization header corresponding to each preset time unit; and/or,
> in case that the distance between the UE and the mobile satellite increases, adding the number of sampling points corresponding to the sampling point deviation value to a last OFDM symbol from the position of the synchronization header in each preset time unit, and keeping the number of sampling points corresponding to other OFDM symbols and CP unchanged, thereby obtaining the synchronization header corresponding to each preset time unit.

4. The method according to claim 2, wherein the downlink synchronization parameter includes a local frame index at a synchronization frame header position, a local slot index, downlink air interface frame index, a downlink air interface slot index, and a sampling point index value corresponding to downlink air interface slot;
the performing the downlink coarse synchronization based on a downlink synchronization parameter in the SSB signal, includes:

taking the downlink air interface frame index as the local frame index, taking the downlink air interface slot index as the local slot index, and performing a next slot synchronization based on the sampling point index value corresponding to the downlink air interface slot.

5. The method according to claim 1, wherein the obtaining an uplink coarse synchronization parameter based on the downlink coarse synchronization parameter and a real-time distance between the UE and the mobile satellite, includes:

  obtaining a first delay corresponding to the distance based on the real-time distance between the mobile satellite and the UE, and obtaining a second delay and a third delay corresponding to the downlink coarse synchronization based on the downlink coarse synchronization parameter; obtaining an uplink air interface frame index and an uplink air interface slot frame index corresponding to a synchronization frame header position, and a sampling point index value corresponding to an uplink air interface slot, based on the first delay, the second delay and the third delay; taking the uplink air interface frame index as the local frame index at the synchronization frame header position, taking the uplink air interface slot index as the local slot index at the synchronization frame header position, and performing a next slot synchronization based on the sampling point index value corresponding to the uplink air interface slot.

6. The method according to claim 1, wherein the performing uplink synchronization pre-compensation on a to-be-transmitted second UE air interface data frame in each corresponding preset time unit, based on the sampling point deviation value; and performing uplink synchronization based on the second UE air interface data frame that has undergone the uplink synchronization pre-compensation, and the uplink coarse synchronization parameter, includes:

  determining a synchronization header corresponding to each preset time unit of the second UE air interface data frame, based on the sampling point deviation value and the number of preset sampling points corresponding to each preset time unit of the base station air interface data frame received by the mobile satellite, thereby obtaining the second UE air interface data frame that has undergone the uplink synchronization pre-compensation; and sending an uplink synchronization signal to the mobile satellite based on the uplink frame index, uplink slot index and the synchronization header corresponding to each preset time unit of the uplink coarse synchronization parameter, and receiving an uplink residual timing deviation control word fed back by the mobile satellite, and completing uplink synchronization based on the uplink residual timing deviation control word.

7. The method according to claim 6, wherein the determining a synchronization header corresponding to each preset time unit of the second UE air interface data frame, based on the sampling point deviation value and the number of preset sampling points corresponding to each preset time unit of the base station air interface data frame received by the mobile satellite, includes:

  in case that the distance between the UE and the mobile satellite decreases, adding the number of sampling points corresponding to the sampling point deviation value to a last OFDM symbol from the position of the synchronization header in each preset time unit, and setting the added sampling points to zero; and keeping the number of sampling points corresponding to other OFDM symbols and CP unchanged, thereby obtaining the synchronization header corresponding to each preset time unit; and/or, in case that the distance between the UE and the mobile satellite increases, reducing the number of sampling points corresponding to the sampling point deviation value from the last OFDM symbol from the position of the synchronization header in each preset time unit, and keeping the number of sampling points corresponding to other OFDM symbols and CP unchanged, thereby obtaining the synchronization header corresponding to each preset time unit.

8. The method according to claim 1, wherein the method further includes:

  performing phase compensation on each OFDM symbol in each preset time unit of the first UE air interface data frame that has gone downlink synchronization pre-compensation; and/or, performing phase compensation on each OFDM symbol in each preset time unit of the second UE air interface data frame that has gone uplink synchronization pre-compensation.

9. The method according to claim 8, wherein the performing phase compensation on each OFDM symbol in each preset time unit, includes:

  obtaining an average delay value corresponding to each OFDM symbol in each preset time unit based on an uplink synchronization pre-compensation value or a downlink synchronization pre-compensation value in each preset time unit;

obtaining a phase value to be compensated for each subcarrier in the frequency domain of each OFDM symbol, based on the average delay value; and performing phase compensation on the OFDM symbol in the frequency domain based on the phase value.

10. The method according to any one of claims 1 to 9, wherein the method further includes:

performing Doppler pre-compensation on each preset time unit of the first UE air interface data frame that has undergone the downlink synchronization pre-compensation; and/or,

performing Doppler pre-compensation on each preset time unit of the second UE air interface data frame that has undergone the uplink synchronization pre-compensation.

11. An uplink and downlink synchronization device for a mobile satellite communication system, comprising:

a sampling point deviation value obtaining module configured to obtain a sampling point deviation value between a user equipment (UE) and a mobile satellite within a preset time unit, based on ephemeris parameters of the mobile satellite and coordinates of the UE;

a downlink coarse synchronization module configured to perform downlink synchronization pre-compensation on a received first UE air interface data frame in each corresponding preset time unit based on the sampling point deviation value, and perform downlink coarse synchronization based on the first UE air interface data frame that has undergone the downlink synchronization pre-compensation;

an uplink synchronization module configured to obtain an uplink coarse synchronization parameter based on the downlink coarse synchronization parameter and a real-time distance between the UE and the mobile satellite; perform uplink synchronization pre-compensation on a to-be-transmitted second UE air interface data frame in each corresponding preset time unit, based on the sampling point deviation value; and perform uplink synchronization based on the second UE air interface data frame that has undergone the uplink synchronization pre-compensation, and the uplink coarse synchronization parameter.

12. The device according to claim 11, wherein the downlink coarse synchronization module is further configured to,

determine a synchronization header corresponding to each preset time unit of the first UE air interface data frame based on the sampling point deviation value and the number of preset sampling points in each preset time unit corresponding to a base station air interface data frame sent by the mobile satellite, thereby obtaining the first UE air interface data frame that has undergone downlink synchronization pre-compensation;

for each preset time unit, according to a position of corresponding synchronization header, take the sampling point corresponding to the preset time unit for baseband processing to obtain a synchronization signal block (SSB) signal; and perform the downlink coarse synchronization based on a downlink synchronization parameter in the SSB signal.

13. The device according to claim 11, wherein the uplink synchronization module is further configured to

determine a synchronization header corresponding to each preset time unit of the second UE air interface data frame, based on the sampling point deviation value and the number of preset sampling points corresponding to each preset time unit of the base station air interface data frame received by the mobile satellite, thereby obtaining the second UE air interface data frame that has undergone the uplink synchronization pre-compensation; and

send an uplink synchronization signal to the mobile satellite based on the uplink frame index, uplink slot index and the synchronization header corresponding to each preset time unit of the uplink coarse synchronization parameter, and receive an uplink residual timing deviation control word fed back by the mobile satellite, and performing uplink synchronization based on the uplink residual timing deviation control word.

14. An electronic device, comprising a memory, a processor, and a computer program stored in the memory and executable on the processor; wherein the computer program, when executed by the processor, causes the processor to execute the method according to any one of claims 1 to 10.

15. A computer-readable storage medium, comprising a computer program stored thereon; wherein the computer program, when executed by a processor, causes the processor to execute the method according to any one of claims 1 to 10.

obtaining a sampling point deviation value between UE and the mobile
satellite within a preset time unit, based on ephemeris parameters of a
mobile satellite and coordinates of the UE — S101

performing downlink synchronization pre-compensation on a received first
UE air interface data frame in each corresponding preset time unit based on
the sampling point deviation value and performing downlink coarse
synchronization based on the first UE air interface data frame that has
undergone the downlink synchronization pre-compensation — S102

obtaining an uplink coarse synchronization parameter based on the downlink
coarse synchronization parameter and a real-time distance between the UE
and the mobile satellite; performing uplink synchronization pre-
compensation on a to-be-transmitted second UE air interface data frame in
each corresponding preset time unit, based on the sampling point deviation
value; and performing uplink synchronization based on the second UE air
interface data frame that has undergone the uplink synchronization pre-
compensation, and the uplink coarse synchronization parameter. — S103

FIG. 1

base station transmits
air interface data
frames

| ←—10ms—→ | | | | | |
| Sfn#n | Sfn#n+1 | Sfn#n+2 | Sfn#n+3 | Sfn#n+4 | ········· |

first UE air interface data
frame
( mobile satellite and the UE
are getting closer)

Sfn#n

Sfn#n+1

less than
10ms

Sfn#n+2

Sfn#N+3

Sfn#n+4

·········

FIG. 2

base station transmits
air interface data
frames

|←—10ms—→|

| Sfn#n | Sfn#n+1 | Sfn#n+2 | Sfn#n+3 | Sfn#n+4 | ········· |

first UE air interface data
frame
( mobile satellite and the UE
are getting farther away)

| Sfn#n |

← greater than 10ms →

| Sfn#n+1 |

| Sfn#n+2 |

| Sfn#N+3 |

| Sfn#n+4 |

| ········· |

FIG. 3

FPGA

downlink coarse synchronization → downlink Doppler pre-compensation → downlink synchronization pre-compensation → remove CP → FFT → phase compensation 2 → phase compensation 1 →

downlink synchronization pre-compensation → downlink Doppler pre-compensation → SSB front-end processing →

uplink coarse synchronization ← uplink Doppler pre-compensation ← uplink synchronization pre-compensation ← add CP ← IFFT ← phase compensation 1 ← phase compensation 2 ← resource mapping ← code modulation

PRACH

CPU

PDCCH processing

PDSCH processing

SSB seearch

CSI processing

ephemeris calculation module

FIG. 4

m point     m point            m point

| cp | | cp | | cp | | | | cp | |

air interface data frame
transmitted by base
station

| $N*\triangle T$ | $(N+1)*\triangle T$ | $(N+2)*\triangle T$ | $(N+3)*\triangle T$ | $(N+4)*\triangle T$ | ········ |

first UE air interface data frame
( satellite and UE are getting
closer)

| $N*\triangle T$ |
| $(N+1)*\triangle T$ |
| $(N+2)*\triangle T$ |
| $(N+3)*\triangle T$ |
| $(N+4)*\triangle T$ |
| ········ |

less than $\triangle T$

| cp | | cp | | cp | | | | cp | |

m-k
point     m point            m point

FIG. 5

m point          m point                                    m point

| cp | | cp | | cp | | | | cp | |

air interface data frame
transmitted by base station

| N*△T | (N+1)*△T | (N+2)*△T | (N+3)*△T | (N+4)*△T | ......... |

first UE air interface data frame
( satellite and UE are getting farther
away)

| N*△T |

| (N+1)*△T |

| (N+2)*△T |

greater than △T

| (N+3)*△T |

| (N+4)*△T |

| ......... |

| cp | | cp | | cp | | | | cp | |

m point          m point                                    m point    k point

FIG. 6

| physical frame N | physical frame N+1 | physical frame N+2 | physical frame N+3 | physical frame N+4 | physical frame N+5 | physical frame N+6 |
|---|---|---|---|---|---|---|

T0                    T1                                    T2

receive SSB data of frames N
and N+1,
start cell search

complete SSB detection at a
certain time and report
synchronization parameter at
time N+6

FPGA enables reported
synchronization parameter at
time N+6 to take effect

FIG. 7

FIG. 8

greater than 10ms greater than 10ms

compensated second
UE air interface data
frame

| Sfn#n | Sfn#n+1 | Sfn#n+2 | Sfn#n+3 | Sfn#n+4 | ········· |

base station air interface data
frame
( mobile satellite and UE are
getting closer and closer)

Sfn#n

Sfn#n+1

Sfn#n+2

←10ms→

Sfn#N+3

Sfn#n+4

·········

FIG. 9

compensated second
UE air interface data
frame

Sfn#n

Sfn#n+1

less than
10ms

Sfn#n+2

Sfn#N+3

Sfn#n+4

·········

base station air interface data
frame
( mobile satellite and UE are
getting farther away)

←10ms→←10ms→

| Sfn#n | Sfn#n+1 | Sfn#n+2 | Sfn#n+3 | Sfn#n+4 | ········· |

FIG. 10

FIG. 11

FIG. 12

uplink and downlink synchronization device for a mobile satellite communication system — 1300

sampling point deviation value obtaining module — 1301

downlink coarse synchronization module — 1302

uplink synchronization module — 1303

FIG. 13

electronic device — 1400

processor — 1401

bus — 1402

transceiver — 1404

memory — 1403

application program code

FIG. 14

<div align="center">

**INTERNATIONAL SEARCH REPORT**

</div>

| | |
|---|---|
| | International application No. |
| | **PCT/CN2023/097855** |

**A.     CLASSIFICATION OF SUBJECT MATTER**

H04B7/185(2006.01)i

According to International Patent Classification (IPC) or to both national classification and IPC

**B.     FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CJFD, VEN, VCN, EXTXT, WPABS, CNTXT: 补偿, 采样, 差值, 偏差, 同步, 位置, 方位, 坐标, 卫星, 星历, 下行, 上行, compensation, sampling, difference, deviation, synchronization, position, orientation, coordinates, satellite, ephemeris, downlink, uplink

**C.     DOCUMENTS CONSIDERED TO BE RELEVANT**

| Category* | Citation of document, with indication, where appropriate, of the relevant passages | Relevant to claim No. |
|---|---|---|
| A | CN 110247697 A (XI'AN INSTITUTE OF SPACE RADIO TECHNOLOGY) 17 September 2019 (2019-09-17)<br>        description, paragraphs 2-54 | 1-15 |
| A | CN 112039579 A (SHANGHAI QINGSHEN TECHNOLOGY DEVELOPMENT CO., LTD. et al.) 04 December 2020 (2020-12-04)<br>        entire document | 1-15 |
| A | CN 113612523 A (DONGFANGHONG SATELLITE MOBILE COMMUNICATION CO., LTD.) 05 November 2021 (2021-11-05)<br>        entire document | 1-15 |
| A | US 2016033649 A1 (TELECOMMUNICATION SYSTEMS, INC.) 04 February 2016 (2016-02-04)<br>        entire document | 1-15 |
| A | WO 2020165211 A1 (UNIVERSITE DU LUXEMBOURG) 20 August 2020 (2020-08-20)<br>        entire document | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 August 2023** | **23 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 535 684 A1

## INTERNATIONAL SEARCH REPORT
### Information on patent family members

International application No.

**PCT/CN2023/097855**

| Patent document cited in search report | | | Publication date (day/month/year) | Patent family member(s) | Publication date (day/month/year) |
|---|---|---|---|---|---|
| CN | 110247697 | A | 17 September 2019 | None | |
| CN | 112039579 | A | 04 December 2020 | None | |
| CN | 113612523 | A | 05 November 2021 | None | |
| US | 2016033649 | A1 | 04 February 2016 | None | |
| WO | 2020165211 | A1 | 20 August 2020 | None | |

Form PCT/ISA/210 (patent family annex) (July 2022)

30